# EUROPÄISCHE PATENTSCHRIFT

(11) **EP 4 423 842 B1**
(45) Veröffentlichungstag und Bekanntmachung des Hinweises auf die Patenterteilung: **09.04.2025**
(21) Anmeldenummer: 22808601.3
(22) Anmeldetag: 11.10.2022
(51) Int. Cl.: H01M 50/367, H01M 50/204, H01M 50/249, H01M 50/30, H01M 10/052

(54) **GASABFÜHRKAMMER UND BATTERIEANORDNUNG ZUM ABFÜHREN VON GASEN AUS EINER KRAFTFAHRZEUGBATTERIE**
GAS DISCHARGE CHAMBER AND BATTERY ASSEMBLY FOR DISCHARGING GASES FROM A MOTOR VEHICLE BATTERY
CHAMBRE DE DÉCHARGE DE GAZ ET ENSEMBLE BATTERIE POUR DÉCHARGER DES GAZ À PARTIR D'UNE BATTERIE DE VÉHICULE AUTOMOBILE

(30) Priorität: 25.10.2021 DE 102021127620
(43) Veröffentlichungstag der Anmeldung: 04.09.2024
(73) Patentinhaber: Audi AG, 85045 Ingolstadt (DE)
(72) Erfinder: LORENZ, Carsten, 85084 Reichertshofen (DE); MILDE, Thomas, 71543 Wüstenrot (DE); SCHÜSSLER, Martin, 85092 Kösching (DE)
(86) Internationale Anmeldenummer: PCT/EP2022/078177
(87) Internationale Veröffentlichungsnummer: WO 2023/072575

(56) Entgegenhaltungen:
- WO-A1-2020/153017
- JP-A- 2016 035 817
- US-A1- 2017 237 055

## Beschreibung

Die Erfindung betrifft eine Gasabführkammer zum Abführen von Gasen aus einer Kraftfahrzeugbatterie mit mindestens einer ersten Batteriezelle, wobei die Gasabführkammer mindestens eine Kammerwandung aufweist, die einen Innenraum der Gasabführkammer von einer Umgebung der Gasabführkammer separiert, mindestens eine zumindest freigebbare erste Eintrittsöffnung, und mindestens eine zumindest freigebbare Austrittsöffnung aufweist. Dabei ist die Gasabführkammer derart ausgestaltet, dass ein aus der mindestens einen ersten Batteriezelle austretendes Gas, welches durch die mindestens eine Eintrittsöffnung in die Gasabführkammer eingeleitet wird, durch die Gasabführkammer bis zur mindestens einen Austrittsöffnung durchleitbar ist und aus der mindestens einen Austrittsöffnung ausführbar ist. Des Weiteren betrifft die Erfindung auch eine Batterieanordnung mit einer Gasabführkammer.

Bei einer Fehlfunktion einer Batteriezelle in einer Hochvoltbatterie, insbesondere für ein Kraftfahrzeug, kann es vorkommen, dass Schadgase aus der Batteriezelle austreten. Diese Schadgase können sich entzünden und eine Havarie der gesamten Hochvoltbatterie verursachen. Daher ist es vorteilhaft, diese Schadgase gezielt und auf sichere Weise aus der Batterie und aus dem Kraftfahrzeug abzuleiten. Hierzu sind bislang verschiedene Möglichkeiten bekannt.

Beispielsweise beschreibt die DE 10 2012 214 984 A1 eine Abgasleitvorrichtung mit einem Hauptleitstück, die für eine Verwendung in einer Abgasanlage eines Kraftfahrzeugs mit Verbrennungsmotor und Batterie geeignet ist. Das Hauptleitstück umfasst einen Mantel, einen ummantelten Hohlraum, eine Eintrittsöffnung und eine von der Eintrittsöffnung aus einer Hauptströmrichtung angeordnete Austrittsöffnung. Die Abgasleitvorrichtung weist zudem ein Nebenstück auf, das einen weiteren Mantel, einen weiteren ummantelten Hohlraum, eine Eintrittsöffnung und eine Austrittsöffnung umfasst, wobei die Austrittsöffnung des Nebenleitstücks mit einer weiteren Eintrittsöffnung des Hauptleitstücks verbunden ist. So lässt sich die Entgasungsöffnung des Batteriepacks mit der Abgasanlage des Fahrzeugs verbinden und Batterieausgasungen können in die Auspuffanlage und schließlich aus dem Fahrzeug ins Freie gelangen.

Weiterhin beschreibt die DE 10 2018 220 992 A1 eine Sicherheitsvorrichtung für einen elektrochemischen Energiespeicher, der ein Berstventil und eine Kühlvorrichtung aufweist. Durch das Berstventil austretende heiße Gase sollen damit schnell heruntergekühlt werden können. Zur Kühlung kann dabei eine Kühlplatte vorgesehen sein, die gleichzeitig als Kühlplatte des Batteriepacks ausgeführt ist, so dass das austretende Gas entlang des Unterbodens des Fahrzeugs beziehungsweise entlang der Kühlplatte des Batteriepacks geführt werden kann. Weiterer relevanter Stand der Technik wird in Dokumenten JP 2016 035817 A, WO 2020/153017 A1 und US 2017/237055 A1 offenbart.

Aus Batteriezellen austretende Schadgase sollen also nicht nur aus der Batterie und dem Fahrzeug abgeleitet werden können, sondern sie sollen auf dem Entgasungsweg nach Möglichkeit auch hinsichtlich ihres Gefahrenpotentials möglichst entschärft werden, was in den oben genannten Beispielen durch das Vorsehen einer Kühlung sowie durch das Führen durch eine Auspuffanlage erreicht werden soll.

Nichts desto weniger bleibt das Bestreben, die Sicherheit im Zusammenhang mit dem Ableiten von Gasen aus einer Batterie weiter zu steigern, bestehen.

Aufgabe der vorliegenden Erfindung ist es daher, eine Gasabführkammer und eine Batterieanordnung bereitzustellen, die es ermöglichen, ein aus einer Batteriezelle austretendes Gas auf möglichst sichere und effiziente Weise abzuführen.

Diese Aufgabe wird gelöst durch eine Gasabführkammer und eine Batterieanordnung mit den Merkmalen gemäß den jeweiligen unabhängigen Patentansprüchen. Vorteilhafte Ausgestaltungen der Erfindung sind Gegenstand der abhängigen Patentansprüche, der Beschreibung sowie der Figuren.

Eine erfindungsgemäße Gasabführkammer zum Abführen von Gas aus einer Kraftfahrzeugbatterie mit mindestens einer Batteriezelle gemäß des unabhängigen Anspruchs 1.

Die Erfindung beruht dabei gleichzeitig auf mehreren Erkenntnissen: Zum einen ist es sehr vorteilhaft, ein abzuführendes Gas nicht über einen schmalen Kanal abzuführen oder zumindest nicht ausschließlich über einen schmalen Kanal, sondern hierfür ein möglichst großes Volumen zu nutzen, wie dies zum Beispiel durch die Gasabführkammer als Ganzes bereitgestellt werden kann. Wird ein Gas in eine solche Gasabführkammer mit einem großen Volumen eingeführt, so kann das Gas expandieren und kühlt sich hierdurch ab. Dies wiederum beruht auf der Erkenntnis, dass ein Abkühlen des Gases sehr wichtig ist, um eine Selbstentzündung des Gases beim Austritt aus dem Gasabführsystem zu verhindern. Um jedoch das von der Gasabführkammer bereitgestellte Gesamtvolumen möglichst effizient zur Abkühlung des eingeleiteten Gases nutzen zu können, ist es vorteilhaft, das Gas möglichst breit und flächig innerhalb dieser Abführkammer zu verteilen. Würde eine solche Kammer lediglich eine Eintrittsöffnung und eine Austrittsöffnung aufweisen, so könnte das Gas einen sehr kurzen Strömungspfad von der Eintrittsöffnung direkt zur Austrittsöffnung nehmen, wodurch sich, je nach Positionierung der Ein- und Austrittsöffnung zueinander, nicht das maximale durch die Kammer bereitgestellte Volumen nutzen ließe. Dies lässt sich nun vorteilhafterweise durch das Vorsehen der Gasverteilungsstruktur ändern. Diese Gasverteilungsstruktur, welche auch mehrere einzelne Gasverteilungseinrichtungen und/oder Gasverteilungsstrukturelemente aufweisen kann, kann für eine Verteilung des in die Gasabführkammer eingeführten Gases sorgen, bevor dieses den Innenraum wieder über die mindestens eine Austrittsöffnung verlässt. Dadurch lässt der Gasabführpfad durch den Innenraum gezielt auffächern und breit und flächig verteilen, wodurch das gesamte Volumen der Gasabführkammer nutzbar wird. Durch eine solche breite und flächige Verteilung kann wiederum erreicht werden, dass die Gasgeschwindigkeiten und Gastemperaturen reduziert werden, um eine Entzündung der brennbaren Kohlenwasserstoffanteile und reinem Wasserstoff am Systemaustrittspunkt effektiv zu vermeiden. Weiterhin wird durch das Vorsehen der Gasverteilungsstruktur auch das Abscheiden von im Gas mitgeführten Partikel gefördert. Gerade solche Partikel sind dabei Zündquellen beim Gasaustritt aus der finalen Austrittsöffnung. Dadurch, dass hierdurch auch erreicht werden kann, dass sich glühende Partikel ablagern oder diese heißen Partikel zusätzlich ebenfalls abgekühlt werden, wenn sie auf die Gasverteilungsstruktur treffen, sind am Austritt keine Zündquellen mehr vorhanden und auch die Gastemperatur ist so gering, dass eine Selbstentzündung ausgeschlossen werden kann. Ein weiterer Vorteil der Gasverteilungsstruktur besteht zudem noch darin, dass durch die gasverteilende Wirkung auch unabhängig von der Einleitungsposition, d.h. von der Position der Eintrittsöffnung in Bezug auf den Innenraum, eine effiziente Gasabkühlung beim Durchlaufen der Gasabführkammer bis zur Austrittsöffnung bereitgestellt werden kann. Dies erlaubt es zum Bespiel auch, das Gas optional über mehrere, z.B. jeweiligen unterschiedlichen Batteriemodulen zugeordneten Eintrittsöffnungen einzuleiten. Außerdem können durch die Gasverteilungsstruktur sehr homogene Druckverhältnisse im Innenraum eingestellt werden, wodurch die Gasabführkammer insgesamt weniger druckbeständig und damit einfacher ausgebildet werden kann.

Gemäß der Erfindung weist die Gasverteilungsstruktur mindestens einen in einem ersten Bereich des Innenraums angeordneten Gasabführkanal auf, der mindestens eine partiell gasdurchlässige Kanalwand aufweist, die den ersten Bereich vom zweiten Bereich des Innenraums zumindest zum Teil separiert, wobei die mindestens eine erste Eintrittsöffnung in den zweiten Bereich des Innenraums mündet und wobei die mindestens eine Austrittsöffnung in ein Inneres der Gasabführkammer im ersten Bereich mündet, insbesondere wobei die mindestens eine Kanalwand derart ausgebildet ist, dass eine Gasdurchlässigkeit der Kanalwand in Abhängigkeit von einer Entfernung von der mindestens einen Austrittsöffnung variiert, zum Beispiel mit zunehmendem Abstand zunimmt. Mittels eines solchen Gasabführkanals lässt sich eine Gasverteilung innerhalb des Innenraums auf besonders vorteilhafte weise umsetzen. Dieser mindestens eine Gasabführkanal weist zumindest eine gasdurchlässige Kanalwand auf, die einen ersten Bereich des Innenraums der Gasabführkammer, in welchem die Austrittsöffnung angeordnet ist, von einem zweiten Bereich des Innenraums, in welchen die Eintrittsöffnung mündet, separiert. Mit anderen Worten muss ein durch die Eintrittsöffnung in die Gasabführkammer eingeführtes Gas zunächst die gasdurchlässige Kanalwand durchdringen, um zur Austrittsöffnung gelangen zu können. Dadurch, dass die Gasdurchlässigkeit der Kanalwand in Abhängigkeit von einer Entfernung von der Austrittsöffnung variiert, kann vorteilhafterweise der Weg des Gasabführpfads beeinflusst werden. Beispielsweise lässt sich so vermeiden, dass, wenn die Eintrittsöffnung in der Nähe der Austrittsöffnung angeordnet ist, das Gas unmittelbar von der Eintrittsöffnung zur Austrittsöffnung strömt. Beispielsweise kann ein solcher kurzer direkter Weg durch eine verminderte Gasdurchlässigkeit der Kanalwand in diesem Bereich verhindert werden oder entsprechend mit einem größeren Strömungswiderstand versehen werden. Dadurch lässt sich beispielsweise der Strömungsweg beziehungsweise der vom Gas genommene Gasabführpfad gezielt gestalten, verlängern und insbesondere lässt sich der Gasabführpfad hierdurch gezielt auffächern und breit und flächig verteilen, wodurch das gesamte Volumen der Gasabführkammer nutzbar wird. Durch eine solche breite und flächige Verteilung kann wiederum erreicht werden, dass die Gasgeschwindigkeiten und Gastemperaturen reduziert werden, um eine Entzündung der brennbaren Kohlenwasserstoffanteile und reinem Wasserstoff am Systemaustrittspunkt effektiv zu vermeiden. Weiterhin kann eine solche zusätzliche, partiell gasdurchlässige Kanalwand genutzt werden, um daran gezielt im Gas mitgeführte Partikel abzuscheiden, wie oben bereits beschrieben. Dadurch, dass hierdurch auch erreicht werden kann, dass sich glühende Partikel ablagern oder diese heißen Partikel zusätzlich ebenfalls abgekühlt werden, wenn sie auf die partiell gasdurchlässige Kanalwand treffend, sind am Austritt keine Zündquellen mehr vorhanden und auch die Gastemperatur ist so gering, dass eine Selbstentzündung ausgeschlossen werden kann. Ein weiterer besonders großer Vorteil der Erfindung liegt vor allem darin, dass durch die Variation der Gasdurchlässigkeit der Kanalwand auch erreicht werden kann, dass die beschriebene Funktion unabhängig von der Position der mindestens einen Eintrittsöffnung ist. Unabhängig davon, ob nun die mindestens eine Eintrittsöffnung sehr nah an der Austrittsöffnung angeordnet ist oder nicht, kann immer eine geeignete Verteilung des Gases in der Gasabführkammer erreicht werden. Dies ermöglicht es beispielsweise auch, mehrere Eintrittsöffnungen an verschiedenen Positionen der Gasabführkammer vorzusehen, wobei unabhängig davon, durch welche der Eintrittsöffnungen Gas in die Gasabführkammer eintritt, für das Gas immer eine ähnliche abkühlende und sich verteilende Wirkung erzielt werden kann. Dies wiederum ermöglicht es, die Gasabführkammer zum Beispiel direkt unterhalb oder oberhalb einer Hochvoltbatterie eines Kraftfahrzeugs vorzusehen und die einzelnen Batteriemodule oder Zellen über eine direkte Zuführverbindung mit der Gasabführkammer zu koppeln. Somit können Gase aus einer Batteriezelle auf direktem und kürzestem Weg in eine solche Gasabführkammer eingeleitet werden. Unabhängig von der Einleitungsposition kann dann eine effiziente Gasabkühlung beim Durchlaufen der Gasabführkammer bis zur Austrittsöffnung bereitgestellt werden.

Unter einer Kammerwandung ist vorzugsweise die räumliche und strukturelle Begrenzung des Gesamtvolumens der Gasabführkammer zu verstehen. Die Kammerwandung kann also entsprechend optional auch in mehrere einzelne Kammerwände gegliedert sein, wie dies später noch näher erläutert wird. In der Kammerwandung können die zumindest freigebbare erste Eintrittsöffnung sowie auch die Austrittsöffnung vorgesehen sein. Dabei kann die Gasabführkammer nicht nur eine einzelne Eintrittsöffnung und eine einzelne Austrittsöffnung aufweisen, sondern optional auch mehrere Eintrittsöffnungen und optional mehrere Austrittsöffnungen. Die Anzahl an Eintritts- und Austrittsöffnungen kann sich dabei unterscheiden. Unter einer zumindest freigebbaren Eintrittsöffnung soll dabei im Allgemeinen eine Eintrittsöffnung verstanden werden können, die entweder permanent offen ist, zum Beispiel ein permanentes Loch in der Kammerwandung, oder die grundsätzlich verschlossen ist und erst unter einer bestimmten Bedingung öffnet, zum Beispiel bei Überdruck, oder temperaturabhängig. Die zumindest freigebbare Eintrittsöffnung kann also zum Beispiel auch erst dann freigegeben werden, wenn die mindestens eine erste Batteriezelle, welche der mindestens einen ersten Eintrittsöffnung zugeordnet ist, ausgast. Auch die mindestens eine zumindest freigebbare Austrittsöffnung kann so ausgestaltet sein, dass diese entweder permanent vorhanden ist oder erst dann freigegeben wird, wenn die mindestens eine erste Batteriezelle ausgast. Die Ein- beziehungsweise Austrittsöffnung kann zum Beispiel als Überdruckventil oder Berstmembran oder Schmelzmembran ausgebildet sein.

Des Weiteren gehört zur Erfindung auch eine Batterieanordnung mit einer erfindungsgemäßen Gasabführkammer oder einer ihrer Ausgestaltungen. Die Batterieanordnung kann dabei zusätzlich zur Gasabführkammer auch die Kraftfahrzeugbatterie mit der mindestens einen Batteriezelle aufweisen. Die Kraftfahrzeugbatterie kann zum Beispiel als eine Hochvoltbatterie ausgebildet sein. Die mindestens eine Batteriezelle kann zum Beispiel eine Lithium-Ionen-Zelle darstellen. Dabei kann die Kraftfahrzeugbatterie auch vielzählige Batteriezellen umfassen, insbesondere auch mehrere Batteriemodule mit jeweils mehreren Batteriezellen. Eine jeweilige der Batteriezellen, einschließlich der mindestens einen ersten Batteriezelle, kann dann eine entsprechende freigebbare Entgasungsöffnung aufweisen, aus welcher im Entgasungsfall der betreffenden Batteriezelle das Gas aus der betreffenden Batteriezelle entweichen kann. Auch diese kann zum Beispiel als Berstmembran, Überdruckventil oder ähnliches ausgebildet sein.

Die Austrittsöffnung der Gasabführkammer kann eine finale Austrittsöffnung darstellen, aus welcher das Gas letztendlich auch aus dem Kraftfahrzeug abgeleitet wird, in welchem die Gasabführkammer Anwendung findet. Alternativ kann sich an die Austrittsöffnung noch ein weiterer Gasabführkanal anschließen, der das austretende Gas bis zu einer finalen Austrittsöffnung des Kraftfahrzeugs ableitet. Dies bietet mehr Flexibilität hinsichtlich der Positionierung der mindestens einen finalen Austrittsöffnung.

Weiterhin ist es denkbar, dass der Gasabführkanal nur eine gasdurchlässige Kanalwand aufweist. Der Gasabführkanal kann zum Beispiel als der gesamte erste Bereich des Innenraums definiert sein, wobei der Innenraum sich lediglich in den ersten und zweiten Bereich gliedern kann. Die beiden Bereiche sind dann entsprechend durch die gasdurchlässige Kanalwand separiert. Der Gasabführkanal kann aber auch zwei Kanalwände aufweisen, insbesondere zwei solche gasdurchlässigen Kanalwände, sodass der Innenraum durch diese gasdurchlässigen Kanalwände zum Beispiel in zumindest drei Teilbereiche gegliedert ist, von denen einer, nämlich der erste Bereich, den Gasabführkanal selbst darstellt. Auch können mehrere Gasabführkanäle vorgesehen sein, wie dies später noch näher erläutert wird. Bei einer vorteilhaften Ausgestaltung der Erfindung variiert die Gasdurchlässigkeit der Kanalwand in Abhängigkeit von einer Entfernung von der mindestens einen Austrittsöffnung derart, dass sich die Gasdurchlässigkeit mit zunehmender Entfernung von der Austrittsöffnung erhöht. Dies ist besonders vorteilhaft, da so erschwert ist, wenn zum Beispiel die Eintrittsöffnung in der Nähe der Austrittsöffnung, von der gasdurchlässigen Kanalwand separiert, angeordnet ist, dass das Gas den direkten Weg zur Austrittsöffnung nimmt, da die Gasdurchlässigkeit der Kanalwand in der Nähe der Austrittsöffnung geringer ist. Hier kommt also auch nur eine geringe Menge an Gas durch die Kanalwand durch, was das Gas entsprechend dazu zwingt, an der Kanalwand weiterzuströmen und an anderer Stelle diese zu durchdringen, was mit zunehmender Entfernung zur Austrittsöffnung durch die erhöhte Gasdurchlässigkeit für das Gas einfacher ist.

Beispielsweise kann es vorgesehen sein, dass die Kanalwand einen ersten Wandbereich und einen zweiten Wandbereich aufweist, der weiter von der Austrittsöffnung entfernt ist als der erste Wandbereich, wobei eine dem ersten Wandbereich zugeordnete erste Gasdurchlässigkeit kleiner ist als eine dem zweiten Wandbereich zugeordnete zweite Gasdurchlässigkeit. Zusätzlich ist es auch denkbar, dass die Gasdurchlässigkeit innerhalb der jeweiligen Wandbereiche ebenfalls abhängig von der Entfernung zur Austrittsöffnung variiert. Alternativ kann die Kanalwand auch in diskrete Wandbereiche segmentiert sein, innerhalb von welchen die Gasdurchlässigkeit gleich ist.

Hierdurch lässt sich gezielt der Strömungswiderstand in Querströmungsrichtung, d.h. quer, insbesondere senkrecht zu einer Längserstreckungsrichtung des Gasabführkanals, einstellen und zwar unterschiedlich je nach Entfernung zur mindestens einen Austrittsöffnung. Dies lässt sich aber nicht nur durch eine unterschiedliche bzw. variierende Gasdurchlässigkeit der mindestens einen Kanalwand des Gasabführkanals bewerkstelligen sondern zusätzlich oder alternativ auch durch Gaslenkstrukturen, wie diese später näher erläutert werden. D.h. die Kanalwand kann auch mit einer konstanten, nicht variierenden Gasdurchlässigkeit ausgebildet sein, oder mit einer Gasdurchlässigkeit, die zwar bereichsweise auch variieren kann, aber z.B. nicht notwendigerweise auch abhängig vom einem Abstand zur mindestens einen Austrittsöffnung variieren muss. Unterschiedliche Querströmungswiderstände des Strömungspfads in die oben definierte können gezielt durch diese Gaslenkstrukturen bereitgestellt sein, die dann z.B. einer solchen Gasquerströmung abhängig vom Abstand zur Austrittsöffnung in der zweiten Richtung mehr oder weniger Widerstand bieten.

Bei einer weiteren vorteilhaften Ausgestaltung der Erfindung ist die Austrittsöffnung bezüglich einer Längserstreckungsrichtung des Gasabführkanals an einem Ende des Gasabführkanals angeordnet. Dadurch kann es erreicht werden, dass der Weg, den das Gas bis zur Austrittsöffnung nehmen muss, möglichst lange ist. Dies erlaubt es wiederum, das Gas maximal effizient innerhalb der Gasabführkammer abzukühlen. Nichtsdestoweniger wäre es aber auch denkbar, dass die Austrittsöffnung an anderer Position des Gasabführkanals angeordnet ist, zum Beispiel mittig. Weiterhin ist es bevorzugt, dass pro Gasabführkanal lediglich eine einzelne Austrittsöffnung vorgesehen ist. Dies sorgt für definierte Strömungsverhältnisse innerhalb der Gasabführkammer.

Gemäß der Erfindung ist es vorgesehen, dass die Kammerwandung eine erste und eine zweite Kammerwand umfasst, die sich bezüglich einer ersten Richtung gegenüberliegen und die Gasabführkammer in der ersten Richtung und entgegen der ersten Richtung begrenzen. Diese beiden ersten und zweiten Wände sind vorzugsweise die flächenmäßig größten Wände der Gasabführkammer. Bezüglich der bestimmungsgemäßen Einbaulage der Gasabführkammer in einem Kraftfahrzeug ist es bevorzugt, dass die erste Richtung zu einer Fahrzeughochrichtung korrespondiert. Weiterhin ist es vorteilhaft, wenn sich der Gasabführkanal in eine Längsrichtung erstreckt, die senkrecht zur ersten Richtung ist, und wobei die mindestens eine Kanalwand zwischen der ersten und zweiten Kammerwand angeordnet ist und die erste und zweite Kammerwand miteinander verbindet. Die Längserstreckungsrichtung beziehungsweise Längsrichtung des Gasabführkanals kann zum Beispiel in eine zweite Richtung verlaufen, die senkrecht zur ersten Richtung ist. Insbesondere kann der Gasabführkanal zum Beispiel geradlinig in diese zweite Richtung verlaufen. Grundsätzlich ist es aber auch denkbar, dass der Gasabführkanal nicht geradlinig verläuft, sondern zum Beispiel schlangenlinienförmig oder ähnliches. Dies ist jedoch weniger bevorzugt. Weiterhin kann die Kammerwandung auch eine dritte und eine vierte Kammerwand umfassen, die die Gasabführkammer bezüglich der genannten zweiten Richtung begrenzen, die senkrecht zur ersten Richtung ist, wobei der Gasabführkanal von der dritten Kammerwand bis zur vierten Kammerwand verläuft. Mit anderen Worten kann sich der Gasabführkanal über eine gesamte Länge der Gasabführkammer in der zweiten Richtung erstrecken. Durch die mindestens eine gasdurchlässige Kanalwand kann durch die variierende Gasdurchlässigkeit vorteilhafterweise die Gasverteilung innerhalb der Gasabführkammer über deren gesamte Länge gezielt gesteuert werden. Die Gasabführkammer kann im Allgemeinen zum Beispiel so ausgestaltet sein, dass deren Innenraum in mehrere Einzelbereiche gegliedert ist, die von mehreren in der zweiten Richtung verlaufenden Kanalwänden voneinander separiert sind, die gasdurchlässig ausgebildet sind, insbesondere wie zur mindestens einen gasdurchlässigen Kanalwand des Gasabführkanals beschrieben. Die einzelnen Bereiche gliedern sich wiederum in Bereiche, die einen Gasabführkanal definieren, und in welchen jeweils eine Austrittsöffnung vorgesehen ist. Die übrigen zwischen diesen Gasabführkanälen liegenden Bereiche sind Gaseintrittsbereiche, in welchen Gaseintrittsöffnungen vorgesehen sein können. Bezüglich der ersten Richtung wird ein jeweiliger Gasabführkanal dabei ebenfalls von der ersten Kammerwand und der zweiten Kammerwand begrenzt. Senkrecht zur ersten Richtung wird der Gasabführkanal entsprechend durch seine jeweiligen gasdurchlässigen Kanalwände begrenzt. Denkbar ist es aber auch, dass sich ein Gasabführkanal in einem Randbereich der Gasabführkammer befindet, sodass eine Kammerwand gleichzeitig auch eine Kanalwand darstellt. Diese muss dann zum Beispiel nicht notwendigerweise gasdurchlässig ausgebildet sein, sondern kann vollständig gasundurchlässig ausgebildet sein. Weiterhin ist es bevorzugt, dass das Innere der Gasabführkammer eine Höhe in der ersten Richtung aufweist, die deutlich kleiner ist alle übrigen Abmessungen des Innenraums der Gasabführkammer in der zweiten und einer zur ersten und zweiten senkrechten dritten Richtung. Dafür kann die Ausdehnung der Gasabführkammer in dieser zweiten und dritten Richtung sehr groß sein und sich zum Beispiel über nahezu den gesamten Unterbodenbereich des Kraftfahrzeugs erstrecken.

Daher stellt es eine weitere besonders vorteilhafte Ausgestaltung der Erfindung dar, wenn zumindest ein Teil der Kammerwandung durch einen Unterfahrschutz für ein Kraftfahrzeug bereitgestellt ist. Somit kann auf besonders vorteilhafte Weise der Bereich zwischen der Kraftfahrzeugbatterie, insbesondere deren Unterseite, und dem Unterfahrschutz des Kraftfahrzeugs als solche Gasabführkammer genutzt werden. Dieser Bereich stellt ein besonders großes Volumen dar, welches somit vorteilhafterweise genutzt werden kann, um dort den mindestens einen Gasabführkanal zu integrieren und eine breite und flächige Verteilung des Gases über ein sehr großes Gesamtvolumen zu ermöglichen. Zudem lassen sich hierdurch bereits bestehende Strukturen des Kraftfahrzeugs zur Ausgestaltung einer solchen Gasabführkammer nutzen. Zudem kann eine solche Gasabführkammer dann auf besonders bauraumeffiziente Weise in ein Kraftfahrzeug integriert werden. Der Unterfahrschutz kann zum Beispiel eine der oben beschriebenen ersten oder zweiten Kammerwände darstellen. Stellt der Unterfahrschutz zumindest einen Teil der ersten Kammerwand bereit, so ist die zweite gegenüberliegende Kammerwand vorzugsweise durch einen Teil eines Batteriegehäuses der Kraftfahrzeugbatterie bereitgestellt, insbesondere eines Gehäusebodens. Es ist also bevorzugt, dass die Kraftfahrzeugbatterie in ihrer bestimmungsgemäßen Einbaulage bezüglich der Gasabführkammer oberhalb dieser angeordnet ist.

Die unterschiedlichen Gasdurchlässigkeiten der mindestens einen Kanalwand können nun auf unterschiedliche Art und Weisen bereitgestellt werden. Beispielsweise kann es vorgesehen sein, dass der erste Wandbereich gasundurchlässig ausgebildet ist und am die Austrittsöffnung umfassenden Ende des Gasabführkanals angeordnet ist. Mit anderen Worten kann der Bereich der Kanalwand, der sich direkt an die Austrittsöffnung anschließt, vollkommen gasundurchlässig ausgebildet sein. Alternativ kann dieser sich unmittelbar an die Austrittsöffnung anschließende Wandbereich auch mit einer zumindest geringen Gasdurchlässigkeit ausgebildet sein. Der erste Wandbereich kann sich zum Beispiel über eine Länge in der zweiten Richtung erstrecken, die mindestens ein Viertel der Gesamtlänge des Innenraums der Gasabführkammer in der zweiten Richtung beträgt.

Gemäß der Erfindung weist der zweite Wandbereich gasdurchlässige Löcher auf, wobei sich eine durch die Löcher bereitgestellte, auf einen Teilbereich des zweiten Wandbereichs bezogene, mittlere Durchtrittsfläche mit zunehmendem Abstand von der Austrittsöffnung vergrößert. Dies lässt sich zum Beispiel auf einfachste Weise dadurch bereitstellen, indem die Löcher, die zum Beispiel in der zweiten Richtung nebeneinander in der Kanalwand angeordnet sein können, mit zunehmendem Abstand von der Austrittsöffnung einen immer größer werdenden Lochdurchmesser aufweisen. Solche Lochdurchmesser können im einstelligen oder mehrstelligen Millimeterbereich liegen. Die Kanalwand kann aber auch mit feineren Strukturen versehen sein, um eine variierende Gasdurchlässigkeit bereitzustellen. Beispielsweise kann die Kanalwand, zum Beispiel der zweite Wandbereich, als eine Art Netz oder Gitter, insbesondere Metallgitter, oder als poröser Metallschaum oder ähnliches ausgebildet sein. Durch die Größen der Poren eines solchen Schaums beziehungsweise der Zwischenräume eines solchen Netzes oder Gitters kann ebenfalls auf einfache Weise die Gasdurchlässigkeit gesteuert und geeignet eingestellt werden. Die oben genannten Löcher können grundsätzlich beliebige Lochgeometrien aufweisen, zum Beispiel rund, eckig, länglich oder ähnliches.

Gemäß der Erfindung weist die Gasverteilungsstruktur mehrere Gasabführkanäle umfassend den mindestens einen Gasabführkanal auf, wobei die Gasabführkanäle zueinander beabstandet angeordnet sind, zum Beispiel in oben definierter dritter Richtung, wobei in jeden Gasabführkanal eine Austrittsöffnung von mehreren Austrittsöffnungen der Gasabführkammer mündet, und wobei ein jeweiliger Gasabführkanal zwei in der dritten Richtung gegenüberliegende gasdurchlässige Kanalwände aufweist. Die Gasabführkanäle können zum Beispiel parallel zueinander in der zweiten Richtung verlaufen. Die Bereiche, in denen die Gasabführkanäle angeordnet sind, können zum Beispiel als jeweilige erste Bereiche des Innenraums der Gasabführkammer definiert sein, während die übrigen Bereiche als zweite Bereiche des Innenraums definiert sind. Je zwei zweite Bereiche sind also durch einen ersten Bereich mit einem Gasabführkanal separiert, und auch zwei erste Bereiche, in welchen zwei Gasabführkanäle angeordnet sind, sind durch jeweils einen dazwischenliegenden ersten Bereich des Innenraums der Gasabführkammer separiert. Die Austrittsöffnungen der Gasabführkammer sind dabei ausschließlich innerhalb der Gasabführkanäle angeordnet, wobei innerhalb eines jeweiligen Gasabführkanals vorzugsweise nur eine Austrittsöffnung vorgesehen ist. In den dazwischenliegenden zweiten Bereichen des Innenraums können jeweils eine oder mehrere Eintrittsöffnungen münden. Somit lässt sich eine besonders homogene und gleichmäßige Verteilung des in die Kammer eingeleiteten Gases erreichen. Dies führt zu einer besonders homogenen Druckverteilung innerhalb der Gasabführkammer, was es erlaubt, diese für insgesamt geringere Drücke auszulegen.

Bei einer weiteren sehr vorteilhaften Ausgestaltung der Erfindung weist die Gasabführkammer mindestens eine freigebbare zweite Eintrittsöffnung an einer von der ersten Eintrittsöffnung verschiedenen Position auf, wobei die zweite Eintrittsöffnung in den zweiten Bereich des Innenraums mündet, insbesondere wobei die zweite Eintrittsöffnung zumindest einer von der mindestens einen ersten Batteriezelle verschiedenen zweiten Batteriezelle zugeordnet ist. Das Gas aus der ersten Batteriezelle kann also zum Beispiel über die erste Eintrittsöffnung in die Gasabführkammer eingeleitet werden, und das Gas, welches aus einer von der ersten Batteriezelle verschiedenen zweiten Batteriezelle austritt, die zum Beispiel Teil eines anderen Batteriemoduls der Batterie sein kann, kann über die zweite Eintrittsöffnung in die Gasabführkammer eingeleitet werden, und damit an einer anderen Eintrittsposition. Durch die Ausgestaltung der Gasabführkammer lässt sich unabhängig von der Eintrittsposition immer eine besonders gleichmäßige Verteilung des Gases innerhalb der gesamten Gasabführkammer bereitstellen und damit eine besonders effiziente Gasabkühlung bis zum Gasaustritt aus der mindestens einen Austrittsöffnung. Die jeweiligen Eintrittsöffnungen sind dabei vorzugsweise in der oben genannten zweiten Kammerwand angeordnet, welche zum Beispiel durch einen Gehäuseboden eines Batteriegehäuses bereitgestellt sein kann. Die Austrittsöffnungen sind vorzugsweise an einer von dieser zweiten Kammerwand verschiedenen Wand der Gasabführkammer angeordnet.

Dadurch, dass zum Beispiel pro Batteriezelle oder pro Batteriemodul der Kraftfahrzeugbatterie eine jeweils eigenen Eintrittsöffnung vorgesehen sein kann, lässt es sich zudem bewerkstelligen, dass die Pfade von einer betreffenden Batterie bis zur Gasabführkammer für eine jeweilige Batteriezelle beziehungsweise ein jeweiliges Batteriemodul minimiert werden können. Dies ist besonders vorteilhaft, da so das Gas hinsichtlich seines Gefahrenpotentials besonders schnell entschärft werden kann.

Gemäß einer weiteren sehr vorteilhaften Ausgestaltung der Erfindung sind innerhalb des Gasabführkanals als Teil der der Gasverteilungsstruktur mehrere Gaslenkstrukturen zur Beeinflussung eines Strömungspfads des in der Gasabführkammer strömenden Gases angeordnet. Dies hat den großen Vorteil, dass das Gas zusätzlich gezielt durch solche Strukturen gelenkt und umgelenkt und verteilt werden kann. Dabei weisen solche Strukturen nicht nur eine gaslenkende Wirkung, sondern wiederum auch eine abbremsende Wirkung auf, da das Gas mit diesen Strukturen unweigerlich kollidiert. Somit kann durch eine solche Gaslenkstruktur wiederum auch eine gezielte, zusätzliche Partikelabscheidung erreicht werden.

Gemäß einer weiteren sehr vorteilhaften Ausgestaltung der Erfindung sind die Gaslenkstrukturen dabei derart ausgebildet, dass sie ein durch die mindestens eine Kanalwand strömendes Gas zumindest zum Teil bremsen, und/oder dass sie ein durch die mindestens eine Kanalwand strömendes Gas zumindest zum Teil in die Längsrichtung des Gasabführkanals umlenken, und/oder dass sie ein in die Längsrichtung des Gasabführkanals innerhalb des Gasabführkanals strömendes Gas mehrfach in und/oder entgegen zumindest eine Ablenkrichtung ablenken, die einen Winkel mit der Längsrichtung einschließt. Um ein durch die mindestens eine Kanalwand strömendes Gas zumindest zum Teil zu bremsen, kann eine Struktur vorgesehen sein, die zum Beispiel in Art eines Stegs ausgebildet ist, der sich von der ersten zur zweiten Kammerwand erstreckt oder auch nur partiell in diese Richtung erstreckt, und der zudem auch eine Ausdehnung in der zweiten Richtung aufweist. Mit anderen Worten kann ein solcher Steg in Form einer Platte ausgebildet sein, die senkrecht zur dritten Richtung ausgerichtet ist. Gas, welches die Kanalwand in der dritten Richtung durchströmt, prallt somit auf dieser Platte beziehungsweise diesem Steg auf und wird dadurch abgebremst. Eine solche Platte kann aber auch einen Winkel mit der dritten Richtung einschließen, der von 90 Grad und von 0 Grad verschieden ist. Je näher dieser Winkel bei 0 Grad beziehungsweise 180 Grad ist, desto geringer ist die abbremsende Wirkung. Beträgt dieser Winkel zum Beispiel 45 Grad, kann nicht nur eine abbremsende Wirkung, sondern zum Beispiel auch eine umlenkende Wirkung in die zweite Richtung bewirkt werden. Durch solche schrägen Plattenabschnitte, die also eine gewisse Schräge zur Längsrichtung des Gasabführkanals aufweisen, lässt sich damit nicht nur eine abbremsende Wirkung des Gases bereitstellen, welches gerade die Kanalwand durchströmt, sondern zusätzlich auch eine ablenkende Wirkung des Gases, welches aktuell entlang des Gasabführkanals strömt. Durch zum Beispiel entlang des Gasabführkanals in Bezug auf den Neigungswinkel alternierend ausgerichtete solche Stege beziehungsweise Platten kann eine Ablenkwirkung des entlang dieses Kanals strömenden Gases erreicht werden, die zum Beispiel zu einem wellenförmigen Gasabführpfad innerhalb des Gasabführkanals führt. Eine jeweilige Platten kann dabei auch in einem Querschnitt senkrecht zur ersten Richtung gekrümmt verlaufen, zum Beispiel kreisbogenförmig, und einen Abschritt parallel zur dritten Richtung aufweisen, der durch eine Krümmung in einen Abschnitt parallel zur zweiten Richtung übergeht. Im Gasabführkanal können dabei auch vielzählige solcher Platten bzw. Gaslenkstrukturen angeordnet sein, insbesondere in mehreren in der dritten Richtung zueinander beanstandeten Reihen, z.B. in zwei oder drei Reihen pro Gasabführkanal. Die Anordnung der Platten innerhalb einer Reihen kann von Reihe zu Reihe versetzt zueinander sein, so dass die in Längsrichtung, d.h. in der zweiten Richtung, einer Reihe durch den Abstand zweier Gaslenkstrukturen gebildeten Durchgangsöffnungen in der dritten Richtung versetzt zueinander angeordnet sind. Die Abstände dieser Gaslenkelemente in der zweiten Richtung oder auch die Größe bzw. Länge dieser Gaslenkelemente kann zudem in der zweiten Richtung variieren. Auch die Ausbildung und Geometrie der Gaslenkelemente kann in der zweiten Richtung variieren. Dadurch kann auch durch die Gaslenkelemente in der zweiten Richtung der Querströmungswiderstand beeinflusst und gezielt eingestellt werden.

Eine solche oben beschriebene wellenförmige oder zickzackförmige Ablenkung innerhalb des Gasabführkanals kann beispielsweise auch erreicht werden, indem die Gaslenkstrukturen selbst hinsichtlich ihres Verlaufs in der zweiten Richtung zickzackförmig oder wellenförmig und zum Beispiel in der dritten Richtung parallel zueinander angeordnet sind. Somit kann das Gas beziehungsweise dessen Strömung innerhalb des Gasabführkanals nochmal kanalisiert werden, um dieses mehrfach umzulenken. Hierdurch wird der Gasweg effizient verlängert, eine zunehmende Gasabkühlung erreicht und auch wiederum die Partikelabscheidung gefördert. Dadurch, dass das Gas vermehrt auch auf solche Gaslenkstrukturen auftrifft, die sich infolgedessen erwärmen, kann auf effiziente Weise thermische Energie an diese Strukturen übergeben werden. Auch dies wiederum führt zur Abkühlung des Gases. Weiterhin können innerhalb eines Gasabführkanals auch verschiedene solcher Gaslenkstrukturen vorgesehen sein, die insbesondere unterschiedliche Geometrien aufweisen und/oder unterschiedliche der genannten Funktionen erfüllen. Auch kann es vorgesehen sein, dass derartige Gaslenkstrukturen innerhalb des Gasabführkanals über dessen gesamte Länge in der zweiten Richtung vorgesehen sind oder nur über einen Teil seiner Länge in der zweiten Richtung. Damit sind vielzählige Möglichkeiten bereitgestellt, die Gasführung gezielt zu beeinflussen.

Weist die Gasabführkammer nicht nur einen Gasabführkanal, sondern mehrere Gasabführkanäle auf, so können diese weiteren Gasabführkanäle ebenso ausgebildet sein wie zum mindestens einen Gasabführkanal beschrieben. Weist der Gasabführkanal oder die übrigen Gasabführkanäle nicht nur eine gasdurchlässige Kanalwand auf, sondern mehrere, insbesondere zwei, gasdurchlässige Kanalwände, so können diese ebenfalls wie zur mindestens einen gasdurchlässigen Kanalwand des mindestens einen Gasabführkanals beschrieben ausgebildet sein.

Wie bereits erwähnt, betrifft die Erfindung auch eine Batterieanordnung für ein Kraftfahrzeug mit einer erfindungsgemäßen Gasabführkammer oder einer ihrer Ausgestaltungen. Die für die erfindungsgemäße Gasabführkammer und ihre Ausgestaltungen genannten Vorteile gelten damit in gleicher Weise für die erfindungsgemäße Batterieanordnung. Die erfindungsgemäße Batterieanordnung weist dabei zusätzlich die Kraftfahrzeugbatterie auf, die wie zuvor beschrieben ausgestaltet sein kann.

Des Weiteren soll auch ein Kraftfahrzeug mit einer solchen Batterieanordnung als zur Erfindung gehörend angesehen werden.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: eine schematische Querschnittsdarstellung einer Batterieanordnung mit meiner Gasabführkammer gemäß einem Ausführungsbeispiel der Erfindung;
- Fig. 2: eine schematische Darstellung einer Gasabführkammer in einer Draufsicht bei Gaseintritt durch eine erste Eintrittsöffnung gemäß einem Ausführungsbeispiel der Erfindung;
- Fig. 3: eine schematische Darstellung einer Gasabführkammer in einer Draufsicht bei Gaseintritt durch eine zweite Gaseintrittsöffnung gemäß einem weiteren Ausführungsbeispiel der Erfindung;
- Fig. 4: eine schematische Darstellung eines Teils einer Gasabführkammer in einer Draufsicht auf einen Teil eines Gasabführkanals gemäß einem Ausführungsbeispiel der Erfindung;
- Fig. 5: eine schematische Darstellung eines Teils einer Gasabführkammer in einer Draufsicht auf einen Gasabführkanal gemäß einem weiteren Ausführungsbeispiel der Erfindung;
- Fig. 6: eine schematische Darstellung eines Teils der Gasabführkammer in einer Draufsicht mit in den Gasabführkanal integrierten Gaslenkstrukturen gemäß einem Ausführungsbeispiel der Erfindung;
- Fig. 7: eine schematische Darstellung eines Teils einer Gasabführkammer in einer Draufsicht mit in den Gasabführkanal integrierten Gaslenkstrukturen gemäß einem weiteren Ausführungsbeispiel der Erfindung;
- Fig. 8: eine schematische Darstellung eines Teils einer Gasabführkammer in einer Draufsicht auf einen Gasabführkanal mit wellenförmigen Gaslenkstrukturen gemäß einem weiteren Ausführungsbeispiel der Erfindung;
- Fig. 9: eine schematische Darstellung eines Teils einer Gasabführkammer in einer Draufsicht auf einen Gasabführkanal mit längsgerichteten Gaslenkstrukturen gemäß einem weiteren Ausführungsbeispiel der Erfindung; und
- Fig. 10: eine schematische Darstellung einer Gasabführkammer in einer Draufsicht mit mehreren Gasabführkanälen, in welche jeweils unterschiedliche Gaslenkstrukturen integriert sind, gemäß einem weiteren Ausführungsbeispiel der Erfindung.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden, insofern diese innerhalb des Schutzumfangs gemäß dem beigefügten Satz von Ansprüchen sind.

In den Figuren bezeichnen gleiche Bezugszeichen jeweils funktionsgleiche Elemente.

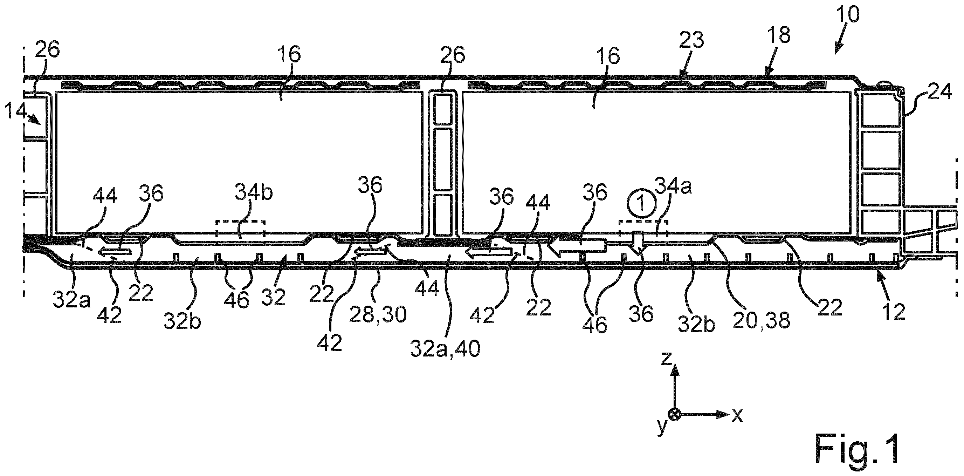

Fig. 1 zeigt eine schematische Darstellung einer Batterieanordnung 10 mit einer Gasabführkammer 12 gemäß einem Ausführungsbeispiel der Erfindung. Die Batterieanordnung 10 weist dabei eine Batterie 14 auf, die vorzugsweise als eine Hochvoltbatterie 14 ausgebildet ist. Diese Batterie 14 umfasst wiederum mehrere Batteriemodule 16, von denen wiederum jedes mehrere Batteriezellen umfassen kann. Von den Batteriemodulen 16 sind vorliegend exemplarisch zwei dargestellt. Die Batterie 14 kann aber auch weitaus mehr als zwei Batteriemodule 16 umfassen. Die Batterie 14 kann aber auch nur ein einzelnes Batteriemodul 16 aufweisen. Die Batteriemodule 16 sind weiterhin in einem Batteriegehäuse 18 der Batterie angeordnet. Das Gehäuse 18 weist dabei einen Gehäuseboden 20 auf, der in diesem Beispiel zusätzlich als Kühlboden ausgestaltet ist und zum Beispiel von einem Kühlmedium durchströmbare Kühlkanäle 22 umfasst. In diesem Beispiel ist zusätzlich oberhalb der Batteriemodule 16 ebenfalls eine weitere Kühlung 23 angeordnet, die ebenfalls mit von einem Kühlmedium durchströmbaren Kühlkanälen ausgebildet sein kann. Das Batteriegehäuse 18 umfasst zudem Seitenwände 24, sowie Trennwände 26 zwischen jeweiligen Aufnahmebereichen zur Aufnahme der Batteriemodule 16. Die dargestellte z-Richtung korrespondiert dabei vorzugsweise zu einer Fahrzeughochrichtung, wenn die Batterieanordnung 10 bestimmungsgemäß in einem Fahrzeug verbaut ist. In diesem Beispiel ist die Gasabführkammer 12 unterhalb der Batterie 14 in Bezug auf die z-Richtung angeordnet. Die unterseitige Wand 28, die die Gasabführkammer 12 beziehungsweise deren Inneres 32 nach unten hin begrenzt, stellt weiterhin gleichzeitig einen Unterfahrschutz 30 des Kraftfahrzeugs dar. Somit kann vorteilhafterweise der zur Verfügung stehende Bauraum zwischen Batterie 14 und dem Unterfahrschutz 30 als solche Gasabführkammer genutzt werden. Die aus Batteriezellen der Batteriemodule 16 austretenden Gase können dabei über einen äußerst kurzen Pfad in die Gasabführkammer 12 eingeleitet werden. Um den Gaseintritt zu ermöglichen, weist die Gasabführkammer 12 mindestens eine Eintrittsöffnung 34a, 34b auf. Im vorliegenden Beispiel ist jedem der Batteriemodule 16 eine entsprechende Eintrittsöffnung 34a, 34b zugeordnet. Gast also beispielsweise das hier dargestellte rechte Batteriemodul 16 beziehungsweise eine von diesem umfasste Zelle aus, so kann das Gas 36, welches aus dieser Zelle austritt und vorliegend durch Pfeile veranschaulicht ist, über die zugeordnete erste Eintrittsöffnung 34a in die Gasabführkammer 12 eingeleitet werden. Entsprechendes gilt, wenn eine Zelle des anderen, in diesem Beispiel linken, Batteriemoduls 16 ausgast, dann würde deren Gas entsprechen über die zweite Eintrittsöffnung 34b in die Gasabführkammer 12 eingeleitet werden. Diese Eintrittsöffnungen 34a, 34b können dabei als freigebbare Eintrittsöffnungen ausgestaltet sein, das heißt sie müssen nicht durch permanente Öffnungen bereitgestellt sein, sondern können zum Beispiel auch erst im Falle eines Ausgasens einer zugeordneten Batteriezelle freigegeben werden. Theoretisch ist es auch denkbar, pro Batteriemodul 16 mehr als nur eine Eintrittsöffnung 34a vorzusehen, zum Beispiel auch pro Batteriezelle eines solchen Batteriemoduls 16. Es können aber auch mehr als eine Eintrittsöffnung 34a, 34 pro Batteriemodul 16 vorgesehen sein, jedoch weniger Eintrittsöffnungen 34a, 34b pro Batteriemodul 16 als Batteriezellen von diesem Batteriemodul 16 umfasst sein.

Die Gasabführkammer 12 wird im Allgemeinen nach oben und unten hin durch zwei Kammerwände begrenzt, nämlich einer bereits erwähnten unterseitigen Kammerwand 28, die durch den Unterfahrschutz 30 bereitgestellt ist, und eine weitere oberseitige Kammerwand 38, die gleichzeitig die Gehäuseunterseite 20 des Batteriegehäuses 18 darstellt. Auch in und gegen x-Richtung sowie in und entgegen y-Richtung können weitere Kammerwände vorgesehen sein, die die Gasabführkammer 12 in den entsprechenden Richtungen begrenzen.

Der Innenraum 32 der Gasabführkammer 12 gliedert sich nun in mehrere Bereiche 32a, 32b. Die Bereiche 32a werden hierbei als erste Bereiche 32a bezeichnet, und die anderen Bereiche 32b als zweite Bereiche 32b. Erste und zweite Bereiche 32a, 32b wechseln sich in x-Richtung ab und erstrecken sich in y-Richtung vorzugsweise über die gesamte Länge des Innenraums 32. Die ersten Bereiche 32a definieren dabei gleichzeitig Gasabführkanäle 40. Ein jeweiliger Gasabführkanal 40, der im Folgenden teilweise auch einfach als Kanal 40 bezeichnet wird, weist dabei weiterhin mindestens eine, vorzugsweise zwei, gasdurchlässige Kanalwände 42 auf. Eine jeweilige Kanalwand 42 separiert somit einen ersten Bereich 32a vom in oder entgegen x-Richtung benachbarten zweiten Bereich 32b. Die Gasdurchlässigkeit der jeweiligen Kanalwände 42 kann auf verschiedenste Arten und Weisen bereitgestellt sein, zum Beispiel durch Löcher 44 in der Kanalwand 42. Wie in dieser Querschnittsdarstellung in Fig. 1 zu sehen, verlaufen diese Kanalwände 42 von der unteren Kammerwand 28 zur oberen Kammerwand 38, vorzugsweise nicht parallel zur z-Richtung, sondern schräg. Dadurch können diese Gasabführkanalwände 42 vorteilhafterweise eine Doppelfunktion in Kombination mit dem Unterfahrschutz 30 übernehmen. Kommt es zu einer Kraftbeaufschlagung des Unterfahrschutzes 30 von unten in Richtung der Batterie 14, so kann durch diese schräg verlaufenden Kanalwände 42 eine gezielte Kraftumlenkung und Einleitung in die Trennstege 26 beziehungsweise in die Seiten 24 erreicht werden, sodass insgesamt die Kraftbeaufschlagung der Batteriemodule 16 möglichst gering gehalten werden kann. Diese Funktion muss aber nicht notwendigerweise durch diesen schrägen Verlauf der Kanalwände 42 realisiert sein, sondern kann zum Beispiel auch durch eine bestimmte dichte Zusammensetzung oder Materialzusammensetzung der Kanalwände 42 realisiert sein. Die Gasabführkanäle 40 bzw. die ersten Bereiche 32a sind dabei bezüglich der z-Richtung vorzugsweise unterhalb der Trennstege 26 und/oder Seitenwände 24 des Batteriegehäuses 18 angeordnet. Auch dies bietet eine optimale Schutzwirkung für die Batteriemodule 16 im Falle von eventuellen Kraftbeaufschlagungen bzw. Intrusionen von unten auf den Unterfahrschutz 30.

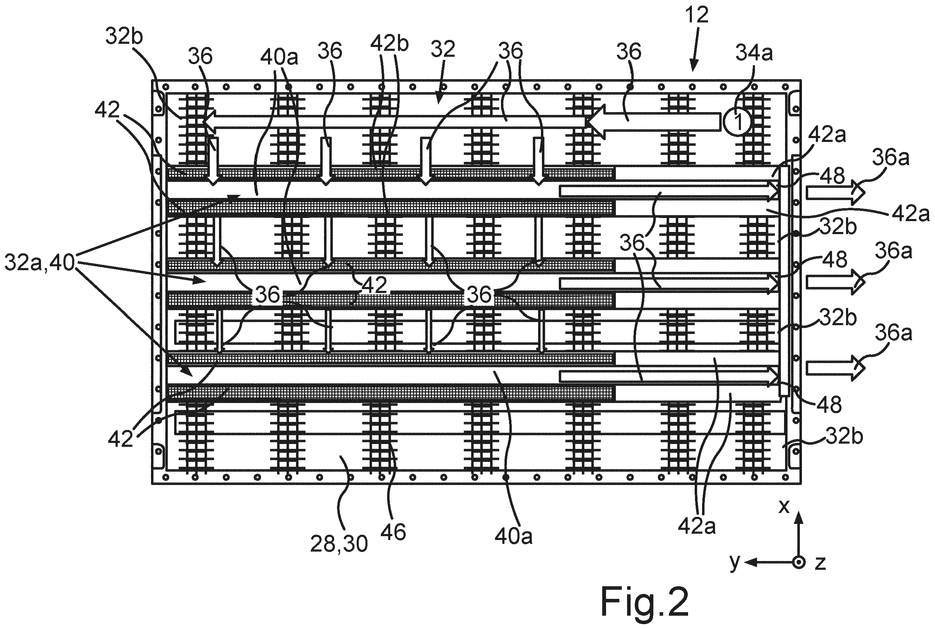

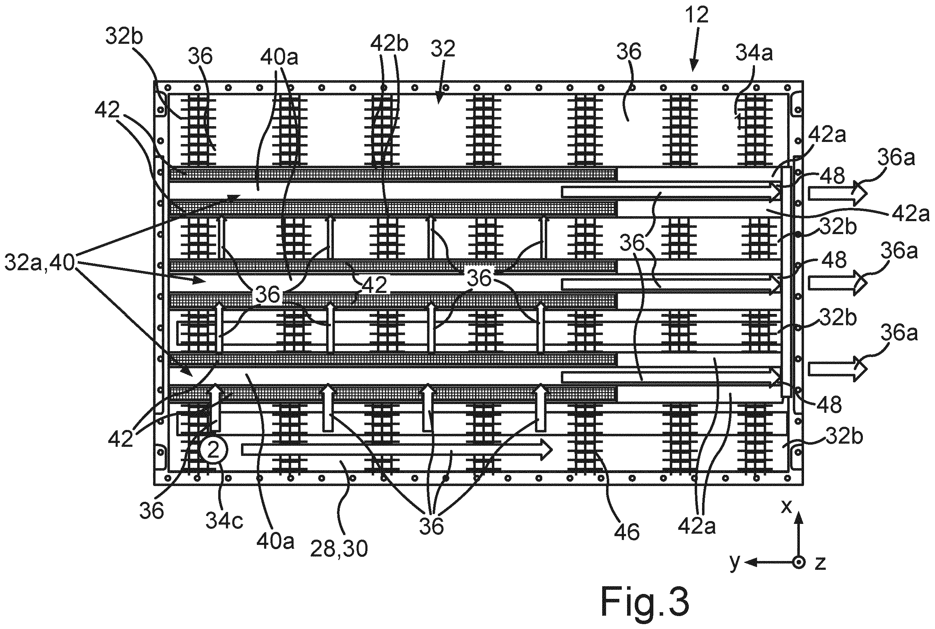

Zudem sind in den zweiten Bereichen 32b des Innenraums 32 der Kammer 12 ebenfalls Strukturen 46 angeordnet, die eine Doppelfunktion übernehmen. Zum einen kann durch diese Strukturen 46, die insbesondere als bogenförmige Stege ausgebildet sein können, wiederum eine bestimmte Abstütz- und Krafteinleitfunktion übernommen werden, insbesondere im Falle einer unterseitigen Kraftbeaufschlagung auf den Unterfahrschutz 30, um die wirkenden Kräfte möglichst gut zu verteilen und eine lokale hohe Kraftbeaufschlagung eines Batteriemoduls 16 zu vermeiden. Zudem sind diese Strukturen 46 so ausgestaltet, dass diese in x-Richtung von einem Gas überströmbar sind und gleichzeitig auch eine Gasströmung in y-Richtung möglich ist. Zudem kann durch sie eine gewisse gasabbremsende Wirkung, vor allem in x-Richtung beziehungsweise entgegen x-Richtung, erreicht werden, was wiederum zur Verlangsamung der Gasströmung beiträgt und damit zum Abkühlen der Gase. Die das Gas 36 veranschaulichenden Pfeile 36 werden in ihrem Verlauf entlang eines Strömungspfads immer kleiner, was veranschaulichen soll, dass sich der aus der Eintrittsöffnung 34a austretende Gasstrom 36 zunehmend über das gesamte Innenvolumen der Kammer 12 verteilt. Dies wird nochmal deutlicher anhand von Fig. 2 und Fig. 3 erläutert.

Fig. 2 zeigt dabei eine schematische Darstellung der Gasabführkammer 12 in einer Draufsicht. Insbesondere zeigt Fig. 2 dabei einen Blick in den Innenraum 32 der Kammer 12, ohne dass die oberseitige Wand 38 der Kammer 12 dargestellt ist. In diesem Beispiel umfasst die Kammer 12 exemplarisch drei Gasabführkanäle 40 in jeweiligen ersten Bereichen 32a des Innenraums 32 der Kammer 12. Das Innere eines jeweiligen Kanals 40 ist im Übrigen mit 40a bezeichnet. Die zwischen den Kanälen 40 liegenden Innenraumbereiche 32b stellen also die zweiten Bereiche 32b des Innenraums 32 dar. Die erste Eintrittsöffnung 34a ist in Fig. 2 durch einen Kreis veranschaulicht. Um das durch die Eintrittsöffnung 34a in die Kammer 12 eingeleitete Gas 36 wieder aus der Kammer 12 abzuführen, weist die Kammer 12 pro Gasabführkanal 40 eine entsprechende Austrittsöffnung 48 auf. Eine jeweilige Austrittsöffnung 48 ist dabei an einem Ende eines jeweiligen Kanals 40 in Bezug auf eine zweite Richtung angeordnet, die zur hier dargestellten y-Richtung korrespondiert. Die Austrittsöffnungen 48 sind bezüglich der y-Richtung und in Bezug auf die bestimmungsgemäße Einbaulage der Gasabführkammer 12 in einem Kraftfahrzeug zudem vorzugsweise an einem Ende der Gasabführkammer 12 angeordnet, das in Richtung Fahrzeugheck weist. Dadurch können die ausgeführten Gase 36a besonders einfach zu einer finalen Austrittsposition im Heckbereich des Fahrzeugs geleitet werden. Die Kanalwände 42 sind aufgrund ihres in z-Richtung schrägen Verlaufs, wie in Fig. 1 dargestellt, in Fig. 2 in der Draufsicht entsprechend breit dargestellt.

Aufgrund der Gasdurchlässigkeit der Kanalwände 42 kann das durch die Eintrittsöffnung 34a in die Kammer 12, insbesondere in einen zweiten Bereich 32b, einströmende Gas 36 in die jeweiligen Gasabführkanäle 40 eindringen. Dabei kann das Gas 36 nicht nur in diese eindringen, sondern diese auch senkrecht zu ihrem Verlauf in beziehungsweise entgegen y-Richtung durchströmen, das heißt in beziehungsweise entgegen x-Richtung. Dies erlaubt vorteilhafterweise eine Verteilung des Gases 36 über das gesamte Volumen der Kammer 12. Diese Verteilung sollte dabei möglichst homogen sein, sodass sich möglichst über die gesamte Kammer 12 hinweg nahezu konstante Druckverhältnisse einstellen. Auch soll vermieden werden, dass das Gas 36, welches im vorliegenden Beispiel sehr nah an einer Austrittsöffnung 48 in die Kammer 12 eintritt, direkt über eine solche Austrittsöffnung 48 wieder abgeführt wird. Dies lässt sich nun vorteilhafterweise dadurch bewerkstelligen, indem die Kanalwände 42 nicht homogen beziehungsweise isotrop gasdurchlässig ausgestaltet sind, sondern indem die Gasdurchlässigkeit dieser Kanalwände 42 in Abhängigkeit vom Abstand zu den Austrittsöffnungen 48 eines jeweiligen Kanals 40 variiert, insbesondere mit zunehmendem Abstand zunimmt. Im vorliegenden Beispiel weist eine jeweilige Kanalwand 42 einen ersten Wandbereich 42a und einen zweiten Wandbereich 42b auf. Der erste Wandbereich 42a ist dabei näher an einer Austrittsöffnung 48 des gleichen Kanals 40, dem auch der erste Wandbereich 42a zugeordnet ist. Entsprechend ist die Gasdurchlässigkeit im ersten Wandbereich 42a geringer als im zweiten Wandbereich 42b. Insbesondere ist in diesem Beispiel der erste Wandbereich 42a vollständig gasundurchlässig, zum Beispiel als massive Wandung oder Blech ausgebildet, während nur der zweite Wandbereich 42b gasdurchlässig ist. Somit kann eine besonders gleichmäßige Verteilung des Gases über den gesamten Innenraum 32 erreicht werden. Das durch die Eintrittsöffnung 34a eintretende Gas kann also somit nicht gleich zu einer Austrittsöffnung 48 strömen, sondern strömt erst entlang der y-Richtung und tritt dann entsprechend durch die jeweiligen Kanalwände 42, insbesondere in den jeweiligen zweiten Bereichen 42b, hindurch und verteilt sich somit auf die mehreren Gasabführkanäle 40, strömt diese entlang bis zur jeweiligen Austrittsöffnung 48 und verlässt daraufhin die Kammer 12. Das ausströmende Schadgas, welches vorliegend mit 36a bezeichnet ist, ist dabei deutlich abgekühlt und enthält weniger oder keine Partikel mehr. Eine Selbstentzündung oder ein Austreten von Feuer aus dem Batteriesystem ist damit ausgeschlossen oder hinsichtlich seines Risikos deutlich vermindert.

Fig. 3 zeigt nochmal eine schematische Darstellung der Gasabführkammer 12 aus Fig. 2, die insbesondere genauso wie zu Fig. 2 und Fig. 1 beschrieben ausgebildet sein kann. In diesem Beispiel findet der Gaseintritt in die Kammer 12 jedoch in einer anderen Position, nämlich durch eine weitere Eintrittsöffnung 34c, statt. Das die Kammer 12 durchströmende Gas ist wieder mit 36 bezeichnet. Aus Gründen der Übersichtlichkeit sind dabei nicht alle das Gas 36 veranschaulichenden Pfeile mit einem Bezugszeichen versehen. Obwohl das Gas 36 an einer anderen Stelle beziehungsweise Eintrittsposition in die Kammer 12 eintritt, kann durch die beschriebenen Strukturen ebenso eine gleichmäßige Verteilung des Gases 36 über den gesamten Kammerinnenraum 32 bewirkt werden. Somit ist es also vorteilhafterweise möglich, unabhängig von der Eintrittsposition eine besonders breite, großflächige und homogene Verteilung des Gases 36 über den gesamten Innenraum 32 zu bewirken, bevor das Gas 36 wieder in die Kammer 12 über die Austrittsöffnungen 48 verlässt. Das Gas kann dadurch maximal abgekühlt werden und vielzählige Partikel können abgeschieden werden.

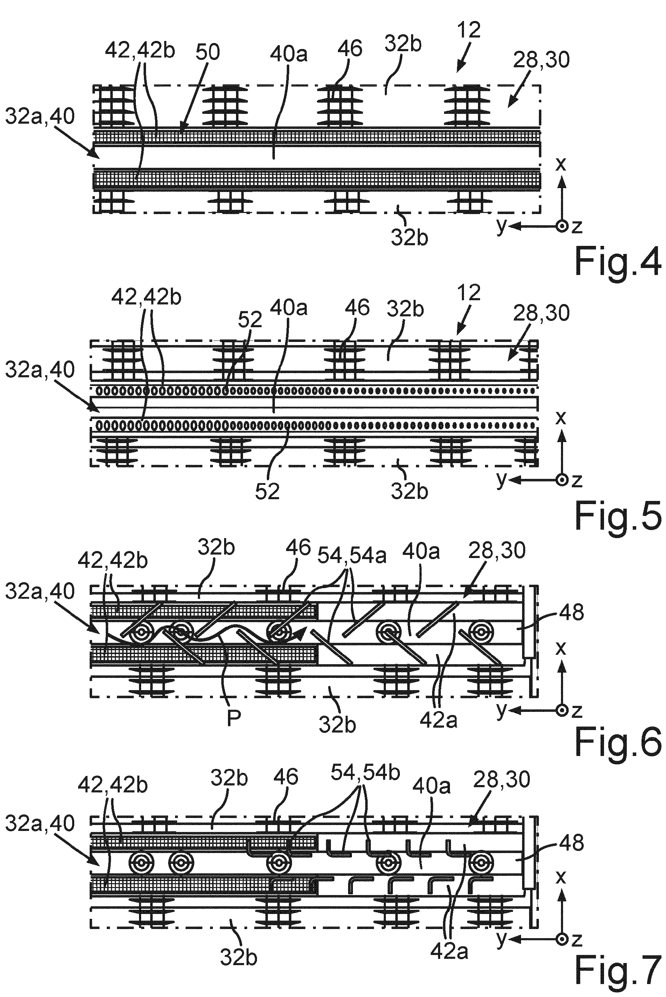

Die unterschiedlichen Gasdurchlässigkeiten der Wände 42 lassen sich auf unterschiedliche Arten und Weisen realisieren, wie dies nun anhand von Fig. 4 und Fig. 5 beschrieben wird.

Fig. 4 und Fig. 5 zeigen dabei jeweils eine schematische Darstellung eines Teils der Kammer 12 in einer Draufsicht auf einen Teil eines jeweiligen Gasabführkanals 40. Die Kanalwände 42 des Kanals 40 sind im in Fig. 4 dargestellten Beispiel mit einer Art Netzstruktur 50 ausgebildet. Diese Netzstruktur 50 sorgt dabei für eine gewisse Gasdurchlässigkeit, zumindest im zweiten Wandbereich 42b. Die Kanalwände 42 können zum Beispiel so ausgestaltet sein, dass diese im ersten Wandbereich 42a (vergleiche Fig. 2) vollständig gasundurchlässig sind, und im zweiten Wandbereich 42b, wie zum Beispiel in Fig. 4 dargestellt, gasdurchlässig ausgebildet sind, insbesondere mit einer in y-Richtung konstanten Gasdurchlässigkeit. Alternativ kann die Gasdurchlässigkeit auch im zweiten Wandbereich 42b abhängig vom Abstand zur Austrittsöffnung 48 (vergleiche Fig. 2) variieren.

Dies kann zum Beispiel durch eine inhomogene Ausbildung dieser Netzstruktur 50 bewerkstelligt werden, oder aber auch durch unterschiedlich große Löcher 52, wie in Fig. 5 dargestellt. Fig. 5 zeigt ein weiteres Beispiel für die Ausbildung der Kanalwände 42. Wie zu sehen ist, weisen die Kanalwände 42 in diesem Beispiel Löcher 52 auf, die hinsichtlich ihres Durchmessers in y-Richtung und damit mit zunehmendem Abstand von der Austrittsöffnung 48 immer größer werden. Dadurch kann es erreicht werden, dass die mittlere Gasdurchtrittsfläche mit zunehmender Entfernung von der Austrittsöffnung 48 des betreffenden Kanals 40 immer größer wird. Darüber hinaus sind aber auch zahlreiche andere Ausgestaltungen dieser Kanalwände 42 denkbar, um in unterschiedlichen Wandbereichen 42a, 42b oder innerhalb eines solchen Wandbereichs 42b unterschiedliche Gasdurchlässigkeiten zu realisieren.

Weiterhin ist es besonders vorteilhaft, wenn innerhalb der Gasabführkanäle 40 Gaslenkstrukturen angeordnet sind, wie dies nun im Folgenden näher erläutert wird.

Hierzu zeigt Fig. 6 ein erstes Beispiel solcher Gaslenkstrukturen 54 in einem Gasabführkanal 40 gemäß einem Ausführungsbeispiel der Erfindung. Hierbei ist wiederum ein Teil eines solchen Kanals 40 in einer Draufsicht dargestellt. Diese Gaslenkstrukturen 54 sind in diesem Beispiel als schrägstehende Stege 54a ausgebildet. Diese Stege 54a weisen entsprechend einen Winkel mit der Längsrichtung des Kanals 40 auf, welcher sich in beziehungsweise entgegen y-Richtung erstreckt, sowie auch einen Winkel mit der x-Richtung. Hierdurch lassen sich gleich mehrere Funktionen und Wirkungsweisen umsetzen. Ein entlang des Kanals 40 strömendes Gas wird durch diese Strukturen 54 mehrfach umgelenkt, insbesondere wellenförmig beziehungsweise zickzackförmig, um zur Austrittsöffnung 48 gelangen zu können. Exemplarisch ist dies durch den dargestellten Gasabführpfad P veranschaulicht. Zudem wird das Gas, welches die Kanalwände 42 in beziehungsweise entgegen x-Richtung durchläuft, abgebremst, wenn es auf diese Strukturen 54 auftrifft. Dadurch werden zusätzlich Partikel abgeschieden und das Gas abgebremst, was zu einer Abkühlung des Gases führt.

Fig. 7 veranschaulicht ein weiteres Beispiel solcher Gaslenkstrukturen 54, die, wie in Fig. 7 dargestellt, als gekrümmte Stege 54b ausgeführt sind. Gas, welches zum Beispiel entlang des Gasabführkanals 40 strömt, kann so effizient daran gehindert werden, wieder aus diesem Gasabführkanal 40 auszudringen. Umgekehrt wird Gas, welches die Wände 42 durchdringt, in Richtung des Kanals 40 in Richtung der Austrittsöffnung 48 gelenkt. Ein geradliniges Durchströmen beider Kanalwände 42 des Kanals 40 kann dadurch verhindert werden beziehungsweise im Ausmaß verringert werden.

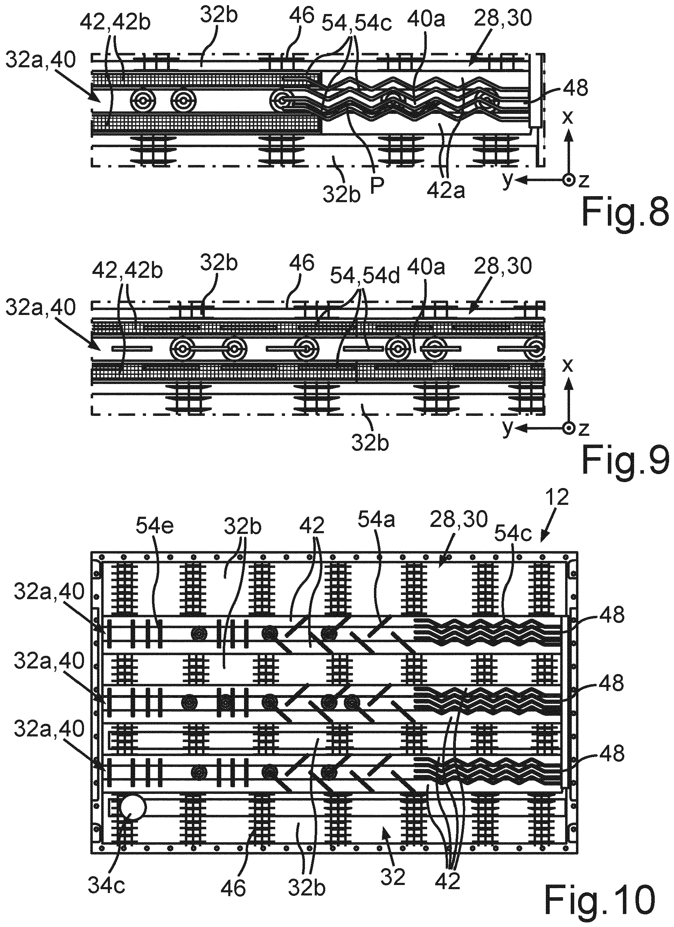

Fig. 8 zeigt ein weiteres Beispiel solcher Gaslenkstrukturen 54, die als zickzackförmige beziehungsweise wellenförmige Strukturen in Kanalrichtung verlaufen. Auch dadurch kann erreicht werden, dass das im Kanal 40 strömende Gas 36 auf einem wellenförmigen Pfad P gelenkt wird. Auch hierdurch wird also das Gas 36 wieder mehrfach umgelenkt, wodurch eine zunehmende Abkühlung und Partikelabscheidung erreicht werden kann.

Fig. 9 zeigt ein weiteres Beispiel solcher Gaslenkstrukturen 54 in Form in Kanalrichtung verlaufender Stege 54d. Das die Kanalwände 42 durchströmende Gas, das heißt entgegen x-Richtung oder in x-Richtung, kann hierdurch effizient abgebremst werden. Dies erhöht wiederum die Partikelabscheidung, verlangsamt das Gas, und zudem lässt sich durch solche Strukturen 54d entsprechend auch der Gasanteil steuern, der in die entsprechenden Kanäle 40 eingeleitet werden soll. Somit kann es erreicht werden, dass sich das Gas 36 beim Durchströmen in beziehungsweise entgegen x-Richtung möglichst gleichmäßig auf die jeweils mehreren Kanäle 40 aufteilt.

Die Strukturen können dabei im Allgemeinen sowohl in einem Kanalbereich angeordnet sein, der bezüglich der y-Richtung zum ersten Wandbereich 42a korrespondiert, als auch in einem Kanalbereich, der bezüglich der y-Richtung zum zweiten Wandbereich 42b korrespondiert, vorgesehen sein oder nur in einem der beiden Kanalbereiche des Kanals 40

Zudem können die beschriebenen Strukturen 54 in beliebiger Weise innerhalb eines gleichen Kanals 40 kombiniert sein oder auch unterschiedliche Strukturen 54 für unterschiedliche Kanäle 40 vorgesehen sein. Die Strukturen können sich über die gesamte Länge des Kanals 40 in y-Richtung erstrecken oder nur einen Teil davon. Die Kombinierbarkeit dieser Strukturen ist nochmal in Fig. 10 explizit veranschaulicht.

Fig. 10 zeigt dabei nochmal eine schematische Darstellstellung einer Gasabführkammer 12 in einer Draufsicht. Hierbei sind für die jeweiligen Kanäle 40 entsprechend verschiedene Strukturen 54 dargestellt, insbesondere wiederum wellenförmige Strukturen 54c, schräge Stege 54a, und zudem noch zuvor nicht erläuterte senkrechte Stege 54e, durch die sich zum Beispiel eine gezielte Gasdurchlenkung durch die Kanäle 40 hindurch erreichen lässt. Dabei sind auch viele weitere Strukturen 54 denkbar. Ein weiterer großer Vorteil solcher Strukturen besteht zudem darin, dass sich hierbei die Stabilität in Bezug auf den Unterfahrschutz 30 zusätzlich erhöhen lässt. Dies gilt nicht nur für diese Gaslenkstrukturen 54, sondern beispielsweise auch für die Kanalwände 42. Insgesamt können die Leitbleche eingesetzt werden, um die strukturelle Anbindung des Unterfahrschutzes 30 an das Batteriesystem 14, beispielsweise den Rahmen 24, zu verbessern. Dies hilft insbesondere bei Schadensereignissen im Unterbodenbereich, zum Beispiel Pollerfall.

Insgesamt zeigen die Beispiele, wie durch die Erfindung ein Schadgasmanagement im Falle eines Thermal Runaways bereitgestellt wird, das es ermöglicht, dass heißes Gas im Bereich des Unterfahrschutzes über Leitbleche und Lochbleche verteilt umgeleitet wird. Hierdurch lagern sich glühende Partikel ab beziehungsweise kühlen diese heißen Partikel ab, wenn sie auf die Leit- und Lochbleche treffen. Im Austritt aus dem Unterfahrschutz sind keine Zündquellen mehr vorhanden und auch die Gastemperatur ist so gering, dass vorzugsweise eine Selbstentzündung ausgeschlossen werden kann. Die Auslegung kann derart gestaltet werden, dass die Funktion unabhängig von der Position der thermisch durchgehenden Zelle im Batteriesystem beziehungsweise der Eintrittsöffnung ist.

## Patentansprüche

1. Gasabführkammer (12) zum Abführen von Gasen (36) aus einer Kraftfahrzeugbatterie (14) mit mindestens einer ersten Batteriezelle, wobei die Gasabführkammer (12)
- mindestens eine Kammerwandung (28, 30, 20, 38), die einen Innenraum (32) der Gasabführkammer (12) von einer Umgebung der Gasabführkammer (12) separiert, aufweist, und die eine erste und eine zweite Kammerwand (28, 30; 38, 20) umfasst, die sich bezüglich einer ersten Richtung (z) gegenüberliegen und die Gasabführkammer (12) in der ersten Richtung (z) und entgegen der ersten Richtung (z) begrenzen,
- mindestens eine zumindest freigebbare erste Eintrittsöffnung (34a, 34b, 34c) aufweist;
- mindestens eine zumindest freigebbare Austrittsöffnung (48) aufweist,
- derart ausgestaltet ist, dass ein aus der mindestens einen ersten Batteriezelle austretendes Gas (36), welches durch die mindestens eine Eintrittsöffnung (34a, 34b, 34c) in die Gasabführkammer (12) eingeleitet wird, durch die Gasabführkammer (12) bis zur mindestens eine Austrittsöffnung (48) durchleitbar ist und aus der mindestens einen Austrittsöffnung (48) ausführbar ist; und
- eine im Innenraum (32) der Gasabführkammer (12) angeordnete Gasverteilungsstruktur (40, 54, 46) aufweist, die dazu ausgelegt ist, ein über die mindestens eine erste Eintrittsöffnung (34a, 34b, 34c) in die Gasabführkammer (12) eingeführtes Gas (36) vor dem Austritt aus der zumindest einen Austrittsöffnung (48) im Innenraum (32) der Gasabführkammer (12) zu verteilen;
- wobei die Gasverteilungsstruktur (40, 54, 46) mindestens einen in einem ersten Bereich (32a) des Innenraums (32) angeordneten Gasabführkanal (40) aufweist, der mindestens eine partiell gasdurchlässige Kanalwand (42) aufweist, die den ersten Bereich (32a) von einem zweiten Bereich (32b) des Innenraums (32) zumindest zum Teil separiert,
- wobei sich der Gasabführkanal (40) in eine Längsrichtung (-y) erstreckt, die in eine zweite Richtung verläuft, und die senkrecht zur ersten Richtung (z) ist,
- wobei der Gasabführkanal (40) zwei gasdurchlässige Kanalwände (42) aufweist, sodass der Innenraum (32) durch diese gasdurchlässigen Kanalwände (42) in zumindest drei Teilbereiche gegliedert ist, von denen einer, der den ersten Bereich (32a) darstellt, den Gasabführkanal (40) darstellt,
- wobei eine der zwei gasdurchlässigen Kanalwände (42) die mindestens eine partiell gasdurchlässige Kanalwand (42) ist,
- wobei die zwei gasdurchlässigen Kanalwände (42) den Gasabführkanal (40) senkrecht zur ersten Richtung (z) begrenzen,
- wobei die zwei Kanalwände (42) jeweils zwischen der ersten und zweiten Kammerwand (28, 30; 38, 20) angeordnet sind und die erste und zweite Kammerwand (28, 30; 38, 20) miteinander verbinden, und
- wobei die mindestens eine erste Eintrittsöffnung (34a, 34b, 34c) in den zweiten Bereich (32b) des Innenraums (32) mündet,
**dadurch gekennzeichnet, dass**
- die mindestens eine Austrittsöffnung (48) in ein Inneres (40a) des Gasabführkanals (40) im ersten Bereich (32a) mündet, und
- eine jeweilige Kanalwand (42) derart ausgebildet ist, dass eine Gasdurchlässigkeit der jeweiligen Kanalwand (42) in Abhängigkeit von einer Entfernung von der mindestens einen Austrittsöffnung (48) derart variiert, dass sich die Gasdurchlässigkeit mit zunehmender Entfernung von der Austrittsöffnung (48) erhöht.

2. Gasabführkammer (12) nach Anspruch 1,
**dadurch gekennzeichnet, dass**
die Kanalwand (42) einen ersten Wandbereich (42a) und einen zweiten Wandbereich (42b) aufweist, der weiter von der Austrittsöffnung (48) entfernt ist als der erste Wandbereich (42a), wobei eine dem ersten Wandbereich (42a) zugeordnete erste Gasdurchlässigkeit kleiner ist als eine dem zweiten Wandbereich (42b) zugeordnete zweite Gasdurchlässigkeit.

3. Gasabführkammer (12) nach einem der Ansprüche 1 oder 2,
**dadurch gekennzeichnet, dass**
die Kammerwandung (28, 30, 20, 38) eine dritte und eine vierte Kammerwand umfasst, die die Gasabführkammer (12) bezüglich der zweiten Richtung (y) begrenzen, die senkrecht zur ersten Richtung (z) ist, wobei der Gasabführkanal (40) von der dritten Kammerwand bis zur vierten Kammerwand verläuft.

4. Gasabführkammer (12) nach einem der vorhergehenden Ansprüche, **dadurch gekennzeichnet, dass**
zumindest ein Teil der Kammerwandung (28, 30, 20, 38) durch einen Unterfahrschutz (30) für ein Kraftfahrzeug bereitgestellt ist.

5. Gasabführkammer (12) nach einem der Ansprüche 2 bis 4,
**dadurch gekennzeichnet, dass**
der zweite Wandbereich (42b) gasdurchlässige Löcher (44, 52) aufweist, wobei sich eine durch die Löcher (44, 52) bereitgestellte auf einen Teilbereich des zweiten Wandbereichs (42b) bezogene mittlere Durchtrittsfläche mit zunehmenden Abstand von der Austrittsöffnung (48) vergrößert.

6. Gasabführkammer (12) nach einem der vorhergehenden Ansprüche, **dadurch gekennzeichnet, dass**
die Gasverteilungsstruktur (40, 54, 46) mehrere Gasabführkanäle (40) umfassend den mindestens einen Gasabführkanal (40) aufweist, wobei die Gasabführkanäle (40) zueinander beabstandet angeordnet sind, wobei in jeden Gasabführkanal (40) eine Austrittsöffnung (48) von mehreren Austrittsöffnungen (48) der Gasabführkammer (12) mündet, wobei ein jeweiliger Gasabführkanal (40) zwei in der dritten Richtung (x) gegenüberliegende gasdurchlässige Kanalwände (42) aufweist.

7. Gasabführkammer (12) nach einem der vorhergehenden Ansprüche, **dadurch gekennzeichnet, dass**
die Gasabführkammer (12) mindestens eine freigebbare zweite Eintrittsöffnung (34a, 34b, 34c) an einer von der ersten Eintrittsöffnung (34a, 34b, 34c) verschiedenen Position aufweist, wobei die zweite Eintrittsöffnung (34a, 34b, 34c) in den zweiten Bereich (32b) des Innenraums (32) mündet, insbesondere wobei die zweite Eintrittsöffnung (34a, 34b, 34c) zumindest einer von der mindestens einen ersten Batteriezelle verschiedenen zweiten Batteriezelle zugeordnet ist.

8. Gasabführkammer (12) nach einem der vorhergehenden Ansprüche, **dadurch gekennzeichnet, dass**
innerhalb des Gasabführkanals (40) mehrere Gaslenkstrukturen (54, 54a, 54b, 54c, 54d, 54e) zur Beeinflussung eines Strömungspfads des in der Gasabführkammer (12) strömenden Gases (36) angeordnet sind, wobei die Gaslenkstrukturen (54, 54a, 54b, 54c, 54d, 54e) derart ausgebildet sind,
- dass sie ein durch die mindestens eine Kanalwand (42) strömendes Gas (36) zumindest zum Teil bremsen; und/oder
- dass sie ein durch die mindestens eine Kanalwand (42) strömendes Gas (36) zumindest zum Teil in die Längsrichtung (-y) des Gasabführkanals (40) umlenken; und/oder
- dass sie ein in die Längsrichtung (-y) des Gasabführkanals (40) innerhalb des Gasabführkanals (40) strömendes Gas (36) mehrfach in und/oder entgegen zumindest eine Ablenkrichtung (x) ablenken, die einen Winkel mit der Längsrichtung (-y) einschließt, z.B. wellenförmig ablenken.

9. Batterieanordnung (10) für ein Kraftfahrzeug mit einer Gasabführkammer (12) nach einem der vorhergehenden Ansprüche und mit der der Kraftfahrzeugbatterie (14).

## Claims

1. Gas discharge chamber (12) for discharging gases (36) from a motor vehicle battery (14) with at least one first battery cell, wherein the gas discharge chamber (12)
- has at least one chamber wall (28, 30, 20, 38), which separates an interior (32) of the gas discharge chamber (12) from an environment of the gas discharge chamber (12), and comprises the one first and one second chamber wall (28, 30, 38, 20), which are opposite each other in relation to a first direction (z) and which delimit the gas discharge chamber (12) in the first direction (z) and counter to the first direction (z),
- has at least one at least releasable first inlet opening (34a, 34b, 34c),
- has at least one at least releasable outlet opening (48),
- is configured such that a gas (36) leaving the at least one first battery cell, which is introduced through the at least one inlet opening (34a, 34b, 34c) into the gas discharge chamber (12), can be passed through the gas discharge chamber (12) to at least one outlet opening (48) and taken out from the least one outlet opening (48), and
- has a gas distribution structure (40, 54, 46) arranged in the interior (32) of the gas discharge chamber (12), which is designed to distribute a gas (36) introduced into the gas discharge chamber (12) via the at least one first inlet opening (34a, 34b, 34c) before its discharge from the at least one outlet opening (48) in the interior (32) of the gas discharge chamber (12),
- wherein the gas distribution structure (40, 54, 46) has at least one gas discharge channel (40) arranged in a first region (32a) of the interior (32), which has at least one partially gas permeable channel wall (42), which at least partially separates the first region (32a) from a second region (32b) of the interior (32),
- wherein the gas discharge channel (40) extends in a longitudinal direction (-y), which runs in a second direction, and which is perpendicular to the first direction (z),
- wherein the gas discharge channel (40) has two gas permeable channel walls (42) such that the interior (32) is divided into at least three sub-regions by these gas permeable channel walls (42), of which one, which constitutes the first region (32a), constitutes the gas discharge channel (40),
- wherein one of the two gas permeable channel walls (42) is the at least one partially gas permeable channel wall (42),
- wherein the two gas permeable channel walls (42) delimit the gas discharge channel (40) perpendicular to the first direction (z),
- wherein the two channel walls (42) are each arranged between the first and second chamber wall (28, 30; 38, 20) and connect the first and second chamber wall (28, 30; 38, 20) to one another, and
- wherein the at least one first inlet opening (34a, 34b, 34c) leads into the second region (32b) of the interior (32),
**characterized in that**
- the at least one outlet opening (48) leads into an interior (40a) of the gas discharge channel (40) in the first region (32a), and
- a corresponding channel wall (42) is constructed such that a gas permeability of the corresponding channel wall (42) varies as a function of the distance from the at least one outlet opening (48) such that the gas permeability rises as the distance from the outlet opening (48) increases.

2. Gas discharge chamber (12) according to claim 1,
**characterized in that**
the channel wall (42) has a first wall region (42a) and a second wall region (42b), which is further away from the outlet opening (48) than the first wall region (42a), wherein a first gas permeability assigned to the first wall region (42a) is lower than a second gas permeability assigned to the second wall region (42b).

3. Gas discharge chamber (12) according to any one of claims 1 or 2,
**characterized in that**
the chamber wall (28, 30, 20, 38) comprises a third and a fourth chamber wall, which delimit the gas discharge chamber (12) in relation to the second direction (y), which is perpendicular to the first direction (z), wherein the gas discharge channel (40) extends from the third chamber wall to the fourth chamber wall.

4. Gas discharge chamber (12) according to any one of the preceding claims,
**characterized in that**
at least a part of the chamber wall (28, 30, 20, 38) is provided by an underrun guard (30) for a motor vehicle.

5. Gas discharge chamber (12) according to any one of claims 2 to 4,
**characterized in that**
the second wall region (42b) has gas permeable holes (44, 52), wherein an average passage area in relation to a partial region of the second wall region (42b), which is provided by the holes (44, 52), enlarges as the distance from the outlet opening (48) increases.

6. Gas discharge chamber (12) according to any one of the preceding claims, **characterized in that**
the gas distribution structure (40, 54, 46) has multiple gas discharge channels (40) comprising the at least one gas discharge channel (40), wherein the gas discharge channels (40) are arranged at a distance from one another, wherein an outlet opening (48) of multiple outlet openings (48) of the gas discharge chamber (12) leads into each gas discharge channel (40), wherein a corresponding gas discharge channel (40) has two opposing gas permeable channel walls (42) in the third direction (x).

7. Gas discharge chamber (12) according to any one of the preceding claims, **characterized in that**
the gas discharge chamber (12) has at least one releasable second inlet opening (34a, 34b, 34c) at a different position from the first inlet opening (34a, 34b, 34c), wherein the second inlet opening (34a, 34b, 34c) leads into the second region (32b) of the interior (32), in particular wherein the second inlet opening (34a, 34b, 34c) is assigned to at least one second battery cell that differs from the at least one first battery cell.

8. Gas discharge chamber (12) according to any one of the preceding claims, **characterized in that**
multiple gas control structures (54, 54a, 54b, 54c, 54d, 54e) for influencing a flow path of the gas (36) flowing in the gas discharge chamber (12) are arranged within the gas discharge channel (40), wherein the gas control structures (54, 54a, 54b, 54c, 54d, 54e) are constructed such that
- they at least partially slow down a gas (36) flowing through the at least one channel wall (42), and/or
- they at least partially divert a gas (36) flowing through the at least one channel wall (42) in the longitudinal direction (-y) of the gas discharge channel (40), and/or
- they deflect a gas (36) flowing within the gas discharge channel (40) in the longitudinal direction (-y) of the gas discharge channel (40) repeatedly in and/or counter to at least one deflection direction (x), which encloses an angle with the longitudinal direction (-y), e.g. in a wave-like manner.

9. Battery arrangement (10) for a motor vehicle with a gas discharge chamber (12) according to any one of the preceding claims and with that of the motor vehicle battery (14).

## Revendications

1. Chambre d'évacuation de gaz (12) pour évacuer des gaz (36) d'une batterie de véhicule automobile (14) avec au moins un premier élément de cellule de batterie, dans laquelle la chambre d'évacuation de gaz (12)
- présente au moins une paroi de chambre (28, 30, 20, 38) qui sépare un espace intérieur (32) de la chambre d'évacuation de gaz (12) d'un environnement de la chambre d'évacuation de gaz (12), et qui comprend une première et une deuxième paroi de chambre (28, 30 ; 38, 20) qui se font face par rapport à une première direction (z) et qui délimitent la chambre d'évacuation de gaz (12) dans la première direction (z) et à l'opposé de la première direction (z),
- présente au moins une première ouverture d'entrée (34a, 34b, 34c) pouvant être libérée ;
- présente au moins une ouverture de sortie (48) pouvant être libérée,
- est conçue de sorte qu'un gaz (36) sortant de la au moins une première cellule de batterie, lequel est introduit dans la chambre d'évacuation de gaz (12) par la au moins une ouverture d'entrée (34a, 34b, 34c), peut être acheminé à travers la chambre d'évacuation de gaz (12) jusqu'à la au moins une ouverture de sortie (48) et peut être évacué par la au moins une ouverture de sortie (48) ; et
- une structure de distribution de gaz (40, 54, 46) disposée dans l'espace intérieur (32) de la chambre d'évacuation de gaz (12), qui est conçue pour distribuer dans l'espace intérieur (32) de la chambre d'évacuation de gaz (12) un gaz (36) introduit dans la chambre d'évacuation de gaz (12) par l'intermédiaire de la au moins une première ouverture d'entrée (34a, 34b, 34c) avant la sortie de la au moins une ouverture de sortie (48) ;
- dans laquelle la structure de distribution de gaz (40, 54, 46) présente au moins un canal d'évacuation de gaz (40) disposé dans une première zone (32a) de l'espace intérieur (32), qui présente au moins une paroi de canal (42) partiellement perméable au gaz, qui sépare au moins partiellement la première zone (32a) d'une deuxième zone (32b) de l'espace intérieur (32),
- dans laquelle le canal d'évacuation de gaz (40) s'étend dans une direction longitudinale (-y) qui s'étend dans une deuxième direction et qui est perpendiculaire à la première direction (z),
- dans laquelle le canal d'évacuation de gaz (40) présente deux parois de canal (42) perméables au gaz, de sorte que l'espace intérieur (32) est divisé par ces parois de canal (42) perméables au gaz en au moins trois zones partielles, dont une, qui représente la première zone (32a), représente le canal d'évacuation de gaz (40),
- dans laquelle une des deux parois de canal (42) perméables au gaz est la au moins une paroi de canal (42) partiellement perméable au gaz,
- dans laquelle les deux parois de canal perméables au gaz (42) délimitent le canal d'évacuation de gaz (40) perpendiculairement à la première direction (z),
- dans laquelle les deux parois de canal (42) sont respectivement disposées entre la première et la deuxième paroi de chambre (28, 30 ; 38, 20) et connectent entre elles la première et la deuxième paroi de chambre (28, 30 ; 38, 20), et
- dans laquelle la au moins une première ouverture d'entrée (34a, 34b, 34c) débouche dans la deuxième zone (32b) de l'espace intérieur (32),
**caractérisée en ce que**
- la au moins une ouverture de sortie (48) débouche dans un intérieur (40a) du canal d'évacuation de gaz (40) dans la première zone (32a), et
- une paroi de canal respective (42) est conçue de sorte qu'une perméabilité au gaz de la paroi de canal respective (42) varie en fonction d'une distance par rapport à la au moins une ouverture de sortie (48) de sorte que la perméabilité au gaz augmente avec une distance croissante par rapport à l'ouverture de sortie (48).

2. Chambre d'évacuation de gaz (12) selon la revendication 1,
**caractérisée en ce que**
la paroi de canal (42) présente une première zone de paroi (42a) et une deuxième zone de paroi (42b) qui est plus éloignée de l'ouverture de sortie (48) que la première zone de paroi (42a), dans laquelle une première perméabilité au gaz associée à la première zone de paroi (42a) est inférieure à une deuxième perméabilité au gaz associée à la deuxième zone de paroi (42b).

3. Chambre d'évacuation de gaz (12) selon l'une quelconque des revendications 1 ou 2,
**caractérisée en ce que**
la paroi de chambre (28, 30, 20, 38) comprend une troisième et une quatrième paroi de chambre délimitant la chambre d'évacuation de gaz (12) par rapport à la deuxième direction (y) qui est perpendiculaire à la première direction (z), dans laquelle le canal d'évacuation de gaz (40) s'étend de la troisième paroi de chambre à la quatrième paroi de chambre.

4. Chambre d'évacuation de gaz (12) selon l'une quelconque des revendications précédentes,
**caractérisée en ce que**
au moins une partie de la paroi de chambre (28, 30, 20, 38) est fournie par une protection anti-encastrement (30) pour un véhicule automobile.

5. Chambre d'évacuation de gaz (12) selon l'une quelconque des revendications 2 à 4, **caractérisée en ce que**
la deuxième zone de paroi (42b) présente des trous (44, 52) perméables au gaz, dans laquelle une surface de passage moyenne mise à disposition par les trous (44, 52) rapportée à une zone partielle de la deuxième zone de paroi (42b) augmente avec une distance croissante de l'ouverture de sortie (48).

6. Chambre d'évacuation de gaz (12) selon l'une quelconque des revendications précédentes,
**caractérisée en ce que**
la structure de distribution de gaz (40, 54, 46) présente plusieurs canaux d'évacuation de gaz (40) comprenant le au moins un canal d'évacuation de gaz (40), dans laquelle les canaux d'évacuation de gaz (40) sont disposés à distance les uns des autres, dans laquelle une ouverture de sortie (48) parmi plusieurs ouvertures de sortie (48) de la chambre d'évacuation de gaz (12) débouche dans chaque canal d'évacuation de gaz (40), dans laquelle un canal d'évacuation de gaz (40) respectif présente deux parois de canal (42) perméables au gaz et opposées dans la troisième direction (x).

7. Chambre d'évacuation de gaz (12) selon l'une quelconque des revendications précédentes,
**caractérisée en ce que**
la chambre d'évacuation de gaz (12) présente au moins une deuxième ouverture d'entrée (34a, 34b, 34c) pouvant être libérée à une position différente de la première ouverture d'entrée (34a, 34b, 34c), dans laquelle la deuxième ouverture d'entrée (34a, 34b, 34c) débouche dans la deuxième zone (32b) de l'espace intérieur (32), en particulier dans laquelle la deuxième ouverture d'entrée (34a, 34b, 34c) est associée à au moins une deuxième cellule de batterie différente de la au moins une première cellule de batterie.

8. Chambre d'évacuation de gaz (12) selon l'une quelconque des revendications précédentes,
**caractérisée en ce que**
plusieurs structures de guidage de gaz (54, 54a, 54b, 54c, 54d, 54e) sont disposées à l'intérieur du canal d'évacuation de gaz (40) pour influencer un chemin d'écoulement de gaz (36) circulant dans la chambre d'évacuation de gaz (12), dans laquelle les structures de guidage de gaz (54, 54a, 54b, 54c, 54d, 54e) sont conçues de sorte
- qu'elles freinent au moins partiellement un gaz (36) s'écoulant à travers la au moins une paroi de canal (42) ; et/ou
- qu'elles dévient un gaz (36) s'écoulant à travers la au moins une paroi de canal (42) au moins partiellement dans la direction longitudinale (-y) du canal d'évacuation de gaz (40) ; et/ou
- qu'elles dévient un gaz (36) s'écoulant dans la direction longitudinale (-y) du canal d'évacuation de gaz (40) à l'intérieur du canal d'évacuation de gaz (40) plusieurs fois dans et/ou contre au moins une direction de déviation (x) qui forme un angle avec la direction longitudinale (-y), par ex. en forme d'onde.

9. Agencement de batterie (10) pour un véhicule automobile avec une chambre d'évacuation de gaz (12) selon l'une quelconque des revendications précédentes et avec celle de la batterie de véhicule automobile (14).
